# EUROPÄISCHE PATENTANMELDUNG

(11) **EP 2 388 445 A1**
(43) Veröffentlichungstag der Anmeldung: **23.11.2011**
(21) Anmeldenummer: 10163595.1
(22) Anmeldetag: 21.05.2010
(51) Int. Cl.: F01K 13/00, F01K 17/06

(54) **Wärmeverschubsystem in einem Dampfkraftwerk und Dampfkraftwerk**

(71) Anmelder: SIEMENS AKTIENGESELLSCHAFT, 80333 München (DE)
(72) Erfinder: Bauer, Günter, 91074 Herzogenaurach (DE); Graeber, Carsten, 91056 Erlangen (DE); Haberberger, Georg, 91088 Bubenreuth (DE)

(57) **Zusammenfassung**

Wärmeverschubsystem in einem Dampfkraftwerk und Dampfkraftwerk

Die Erfindung betrifft ein Wärmeverschubsystem (3, 53) in einem Dampfkraftwerk (1, 51), umfassend einen befeuerten Dampfkessel (5, 59) mit einer abgehenden Rauchgasleitung (7, 57) und einer eingehenden Frischluftleitung (9, 55), sowie eine Abwärmequelle, insbesondere eine Abscheidevorrichtung (15, 65) für CO₂, mit einer Abwärmeleitung (16, 67). Die Abwärmeleitung (16, 67) ist hierbei wärmetechnisch mit der Frischluftleitung (9, 55) gekoppelt. Weiter betrifft die Erfindung ein Dampfkraftwerk (1, 51) mit einem vorgenannten Wärmeverschubsystem (3, 53). Die von der Abscheidevorrichtung (15, 65) zur Verfügung gestellte Abwärme kann hierbei in den Kraftwerksprozess eingebunden und dadurch der Wirkungsgrad eines Dampfkraftwerks (1, 51) erhöht werden.

## Beschreibung

Wärmeverschubsystem in einem Dampfkraftwerk und Dampfkraftwerk

Die Erfindung betrifft ein Wärmeverschubsystem in einem Dampfkraftwerk, umfassend einen befeuerten Dampfkessel mit einer abgehenden Rauchgasleitung und einer eingehenden Frischluftleitung, sowie eine Abwärmequelle, insbesondere eine Abscheidevorrichtung für CO₂. Weiterhin betrifft die Erfindung ein Dampfkraftwerk mit einem vorgenannten Wärmeverschubsystem.

Ein Wärmeverschubsystem der eingangs genannten Art dient der Wärmeübertragung zwischen unterschiedlichen Prozessen innerhalb eines Dampfkraftwerks und damit der Integration und effektiven Nutzung von innerhalb eines Dampfkraftwerks entstehender Abwärme.

Gerade bei einem gegebenen geringen Temperaturniveau ist es bislang nur begrenzt möglich, Abwärme erneut in den Kraftwerksprozess zu integrieren. Trotz bekannter Niedertemperaturnutzungsmöglichkeiten, z.B. in der Kondensatvorwärmerstrecke, durch die ein Teil der Abwärme genutzt werden kann, muss der überwiegende Teil nach wie vor ungenutzt über Kühlwasser an die Umgebung abgeführt werden, da die zur Verfügung stehenden Wärmesenken nicht ausreichend geeignet sind.

Diese Problematik besteht insbesondere auch bei Abwärme, die während der Reinigung von in einem Dampfkraftwerk entstehenden Abgasen entsteht. Vor dem Hintergrund der klimatischen Veränderungen sollen insbesondere neuere Dampfkraftwerke mit Reinigungsvorrichtungen ausgestattet werden, um die Emission von Schadstoffen in die Atmosphäre zu verringern. Insbesondere für den Prozess der CO₂-Abscheidung verbleibt eine große Wärmemenge auf einem geringen Temperaturniveau. Gerade eine solche Abwärme kann bislang nur unzureichend genutzt werden. Sie muss weitestgehend ungenutzt an die Umgebung abgeführt werden, da das Temperaturgefälle nicht ausreicht, um einen Wärmeverschub und damit eine effektive Nutzung der Abwärme zu ermöglichen.

Es ist ein erklärtes Ziel bei der Konzipierung und Nachrüstung von Dampfkraftwerken, die entstehende Abwärme optimal zu integrieren, um einen maximalen Wirkungsgrad zu erzielen.

Es ist demnach eine erste Aufgabe der Erfindung, ein Wärmeverschubsystem in einem Dampfkraftwerk anzugeben, welches mit möglichst geringem Investitionsmehrbedarf die Wirkungsgradeverschlechterung eines Dampfkraftwerkes durch Einbringung einer zusätzlichen Abwärmequelle möglichst niedrig hält.

Eine zweite Aufgabe der Erfindung ist es, ein Dampfkraftwerk mit einem vorgenannten Wärmeverschubsystem anzugeben, welches trotz Einbringung einer zusätzlichen Abwärmequelle eine geringe Wirkungsgradverschlechterung aufweist bzw. hinsichtlich seines Wirkungsgrads maximiert ist.

Die erste Aufgabe der Erfindung wird erfindungsgemäß gelöst durch ein Wärmeverschubsystem mit der Merkmalskombination gemäß Anspruch 1.

Demnach umfasst das Wärmeverschubsystem in einem Dampfkraftwerk einen befeuerten Dampfkessel mit einer abgehenden Rauchgasleitung und einer eingehenden Frischluftleitung, sowie eine Abwärmequelle, insbesondere eine Abscheidevorrichtung für CO₂, mit einer Abwärmeleitung. Hierbei ist vorgesehen, dass die Abwärmeleitung wärmetechnisch mit der Frischluftleitung gekoppelt ist.

In einem ersten Schritt berücksichtigt die Erfindung, dass aufgrund der Nachrüstung und Neukonzipierung von Kraftwerken die Anzahl möglicher Niedertemperaturwärmequellen ansteigt. Die von diesen Quellen ungenutzt abgegebene Abwärme muss zur Vermeidung von Wirkungsgradverlusten in den Kraftwerksprozess eingebunden werden. Hierzu bedarf es geeigneter Niedertemperaturwärmesenken im Kraftwerk, die die entstehende Abwärme auf einem geringen Temperaturniveau nutzen können.

In einem zweiten Schritt erkennt die Erfindung überraschend, dass die einem Dampfkessel vorgeschaltete Frischluftleitung eine solche Niedertemperaturwärmesenke darstellt. Die Frischluft in einem Dampfkraftwerk weist nämlich im Allgemeinen recht niedrige Ansaugtemperaturen zwischen 10 °C und 30 °C auf und bietet so die Möglichkeit, Niedertemperaturwärme aufzunehmen.

Die Erfindung erkennt dabei insbesondere, dass es durch ein vorgenanntes Wärmeverschubsystem ermöglicht wird, eine bereits vorhandene Niedertemperaturwärmesenke zu nutzen, um die von einer zusätzlichen Wärmequelle zur Verfügung gestellte Abwärme wieder in den Kraftwerksprozess zu integrieren.

Die wärmetechnische Kopplung der Frischluftleitung mit der Abwärmeleitung bietet insbesondere die Möglichkeit, die verfügbare Abwärme aus einer CO₂-Abscheidevorrichtung bei einer Temperatur von etwa 60 °C zum Vorwärmen der Frischluft weitgehend zu nutzen. Durch das sehr geringe Temperaturniveau der angesaugten Frischluft ist ein ausreichendes Temperaturgefälle gegeben, welches einen Wärmeaustausch zwischen den beiden Systemen ermöglicht.

Mit anderen Worten wird in die Frisch- oder Ansaugluft des Dampfkessels ein Wärmeüberschuss eingebracht. Dieser kann auf der Rauchgasseite bei deutlich höherem Temperaturniveau z.B. in den Wasser-/Dampfkreislauf des Kraftwerks eingebunden werden.

Das Wärmeverschubsystem bietet die Möglichkeit, bei vertretbarem baulichen Mehraufwand und Investitionskosten eine zusätzliche Niedertemperaturwärmequelle in ein Dampfkraftwerk bzw. in den Gesamtkraftwerksprozess zu integrieren, und unter Berücksichtigung der Kesselbilanz den Gesamtwirkungsgrad gegenüber den bisherigen Lösungen zu verbessern.

Über die Frischluftleitung wird dem Dampfkessel Frischluft zugeführt. Die Frischluft wird üblicherweise über ein Gebläse angesaugt und wird zur Dampfkesselbefeuerung (Sekundärluft) und zur Trocknung und/oder Transport von Brennstoff wie z.B. gemahlener Kohle verwendet (Primärluft).

Die Rauchgasleitung transportiert das bei der Dampfkesselfeuerung entstehende Rauchgas vom Kessel weg und führt es üblicherweise einer oder mehreren Reinigungseinrichtungen, wie beispielsweise einer Rauchgasentschwefelungsanlage und einer CO₂ - Abscheidevorrichtung zu.

Zur Abscheidung von CO₂ aus dem Rauchgas wird dieses üblicherweise mittels eines geeigneten Absorptionsmediums aus dem Abgas herausgewaschen. Hierzu wird ein Absorptions-Desorptions-Prozess angewandt, der eine hohe Abwärmemenge auf niedrigem Temperaturniveau liefert. Diese Niedertemperaturwärme kann über die wärmetechnische Kopplungsstelle der Abwärmeleitung mit der Frischluftleitung auf die Frischluft übertragen werden.

Wärmequellen auf niedrigem Temperaturniveau sind beispielsweise der Waschmittelkühler in der Rauchgaswäsche, der Desorptionskondensator oder ein Zwischenkühler entlang der CO₂-Verdichterstrecke.

In einer vorteilhaften Ausgestaltung der Erfindung ist ein Luftvorwärmer umfasst, der die Rauchgasleitung und die Frischluftleitung wärmetechnisch miteinander koppelt und bezüglich der Frischluftleitung der wärmetechnischen Kopplungsstelle nachgeschaltet ist. Der Luftvorwärmer dient der Vorwärmung der angesaugten Frischluft, die dem Kessel beispielsweise zur Verbrennung zugeführt wird. Der Luftvorwärmer nimmt hierzu Wärme aus dem Rauchgas auf und überträgt diese an die angesaugte Frischluft. Durch die Abkühlung des Rauchgases wird weiterhin der Abwärmeverlust des Dampfkessels verringert.

Der Luftvorwärmer ist der wärmetechnischen Kopplungsstelle der Frischluftleitung mit der Abwärmeleitung nachgeschaltet. Somit ist die Luft am Luftvorwärmer in ihrer Temperatur erhöht. Mit anderen Worten führt die Abwärme, die in den Frischluftstrom eingebunden ist, am Luftvorwärmer des Dampfkessels luftseitig zu einem Wärmeüberschuss. Dieser kann auf der Rauchgasseite bei einem wesentlich höheren Temperaturniveau in einen Wasser-/Dampfkreislauf eingebunden werden.

Bevorzugt ist zwischen dem Luftvorwärmer und der wärmetechnischen Kopplungsstelle die Frischluftleitung zusätzlich wärmetechnisch mit der Rauchgasleitung gekoppelt. Die nochmalige Kopplung der beiden Leitungen ermöglicht einen Wärmeübergang von der wärmeren Rauchgasseite zur kühleren Frischluft.

In einer vorteilhaften Ausgestaltung der Erfindung ist der wärmetechnischen Kopplungsstelle bezüglich der Frischluftleitung ein Frischluftgebläse vorgeschaltet. Über das Frischluftgebläse wird dem System die Frischluft zur Verbrennung zugeführt. Die angesaugte Frischluft stellt die Niedertemperaturwärmesenke dar und nimmt die an der Kopplungsstelle zur Verfügung gestellte Abwärme auf. Die vorgeschlagene Anordnung gewährleistet, dass die erforderliche Temperaturdifferenz besteht. Durch die Anordnung des Frischluftgebläses vor der Kopplungsstelle wird ein wirtschaftlicher Betrieb sichergestellt, da auf der "kalten Seite" der Volumenstrom geringer ist, wodurch der elektrische Eigenbedarf verringert ist.

Vorteilhafterweise ist ein Zwischenkreislauf umfasst, über den die Abwärmeleitung wärmetechnisch mit der Frischluftleitung gekoppelt ist. Ein solcher Zwischenkreislauf verbindet beispielsweise die Abwärmeleitung der Abwärmequelle mittels eines Wärmetransportmediums wärmetechnisch mit der Frischluftleitung. Der Zwischenkreislauf bietet somit die Möglichkeit der regulierbaren Wärmeübertragung zwischen zwei Stellen innerhalb des Kraftwerks mittels des eingesetzten Wärmtransportmediums. Als Wärmetransportmedium eignen sich insbesondere Fluide mit einer hohen Wärmekapazität und guten Fließeigenschaften, wie beispielsweise Wasser. Das Wärmetransportmedium nimmt zum Beispiel mittels eines Wärmetauschers an der Abwärmeleitung Wärme auf und gibt diese über einen Wärmetauscher an die in der Frischluftleitung angesaugte Luft ab.

In einer vorteilhaften Ausgestaltung der Erfindung ist über den Zwischenkreislauf die Rauchgasleitung mit der Frischluftleitung gekoppelt. Dies erlaubt die Einbindung der Abwärmequelle in einen Zwischenkreislauf, der in einem Dampfkraftwerk üblicherweise bereits Teil eines implementierten Wärmeverschubsystems ist und der Kühlung des Rauchgases vor dem Eintritt in eine sich anschließende Rauchgasreinigung dient. Im Hinlauf eines solchen Zwischenkreislaufs weist das zirkulierende Wärmetransportmedium eine geeignet niedrige Temperatur zur Einbringung der Abwärme einer Niedertemperaturabwärmequelle auf.

Die Abwärmeleitung einer CO₂- Abscheidevorrichtung kann an verschiedene Wärmequellen angebunden sein. Insbesondere kann die Abwärme aus der Absorberzuleitung abgeführt werden. Besonders bevorzugt wird das nach dem Desorber noch warme Absorbermedium direkt zur Wärmeübertragung auf die Frischluftleitung oder auf den Zwischenkreislauf zwischen Rauchgasleitung und Frischluftleitung herangezogen. Dazu ist die Leitung des Absorbermediums zwischen Desorber und Absorber, insbesondere über einen Wärmetauscher, zur Abkühlung wärmetechnisch mit der Frischluftleitung oder mit dem Zwischenkreislauf zwischen Rauchgasleitung und Frischluftleitung gekoppelt. Alternativ und ebenfalls vorteilhaft ist ein für die Abscheidevorrichtung oder für die Niedertemperaturwärmequelle generell vorgesehener, bereits implementierter Kühlkreislauf bzw. Zwischenkreislauf, insbesondere über einen Wärmetauscher, wärmetechnisch mit der Frischluftleitung oder dem Zwischenkreislauf zwischen Frischluftleitung und Rauchgasleitung gekoppelt.

Zweckmäßigerweise ist der Luftvorwärmer als ein regenerativer Wärmetauscher ausgebildet. Ein regenerativer Wärmetauscher funktioniert nach dem Prinzip des Wärmespeichers und kann bei hohen zu übertragenden Wärme-Leistungen verwendet werden. Durch die Verwendung beweglicher Speichermassen, also Wärmetransportmedien, die zirkulieren können, gestatten regenerative Wärmetauscher einen kontinuierlichen Betrieb.

Bevorzugt ist an der Rauchgasleitung eine Bypassleitung zur wärmetechnischen Ankopplung einer Anzahl von Verbrauchern angeschlossen. Der aus dem Dampfkessel strömende Rauchgasstrom wird in zwei Teilströme aufgeteilt, wobei der durch die Bypassleitung strömende Teil des Gases beispielsweise für die Versorgung von Speisewasser- oder Kondensatvorwämern verwendet werden kann. Der dabei abgekühlte Teilstrom des Rauchgases wird erneut dem Hauptstrom zugeführt. Der andere Teilstrom durchströmt den Luftvorwärmer. Bei dieser Ausgestaltung wird der Wärmeurüberschuss auf der Frischluftseite, der durch Einkopplung der Wärme aus der Abwärmequelle resultiert, auf die Rauchgasseite übertragen und dort auf wesentlich höherem Temperaturniveau wieder in das Kraftwerk eingebunden.

Die zweite Aufgabe der Erfindung wird erfindungsgemäß gelöst durch ein Dampfkraftwerk mit der Merkmalskombination gemäß Anspruch 10.

Demnach umfasst das Dampfkraftwerk eine Dampfturbine mit einer Anzahl von Teilturbinen, die jeweils von Dampf durchströmbar sind und die über Überströmleitungen miteinander verbunden sind, sowie ein Wärmeverschubsystem der vorbeschriebenen Art. Hierbei ist eine Anzapfleitung zur Auskopplung von Prozessdampf vorgesehen, die wärmetechnisch mit einer Abwärmequelle, insbesondere mit einer Abscheidevorrichtung für CO₂, gekoppelt ist.

Ein Dampfkraftwerk ist die vorherrschende Bauart eines Kraftwerkes zur konventionellen Erzeugung elektrischer Energie aus fossilen Brennstoffen, bei der die thermische Energie von Wasserdampf in einer Dampfturbine ausgenutzt wird. Zum Betrieb einer Dampfturbine wird Wasserdampf in einem Dampfkessel erhitzt und in die Dampfturbine eingeleitet. Dort wird der Dampf expandiert. Die bei der Expansion frei werdende Arbeit wird beispielsweise an einem an die Turbine gekoppelten Generator geleistet. Der Dampfkessel wird üblicherweise mit konventionellen Brennstoffen, wie beispielsweise Erdgas oder Kohle befeuert.

Ein Dampfkraftwerk umfasst in der Regel mehrere Teilturbinen, die jeweils für unterschiedliche Drücke ausgelegt sind. Hierbei sind beispielsweise hintereinander geschaltete Hochdruck (HD)-, Mitteldruck (MD)- und Niederdruck (ND)- Teilturbinen üblich. Die Anzahl der Expansionsstufen, also die Anzahl der hintereinandergeschalteten Teilturbinen, kann je nach Anwendung und nach angeschlossenen Verbrauchern unterschiedlich sein kann. Zwischen den Teilturbinen können aus Überströmleitungen Prozessdampf abgezapft werden, der an zusätzliche Verbraucher weitergeleitet werden kann.

Vorteilhafterweise ist die Anzapfleitung zur Auskopplung von Prozessdampf an eine Überströmleitung angeschlossen. Die Entnahme des Prozessdampfes aus der Überströmleitung bietet die Möglichkeit, große Dampfmengen aus dem Kraftwerksprozess auszukoppeln. Der entnommene Prozessdampf stellt die benötigte Wärmemenge für die CO₂-Absorption bei einem vertretbaren Wirkungsgradverlust zur Verfügung. Die Teil der verbleibenden Abwärme bei der CO₂-Abscheidung wird dem Dampfkraftwerk über die wärmetechnische Kopplung der Abwärmeleitung der Abscheidevorrichtung mit der Frischluftleitung wieder zugeführt.

Insgesamt kann durch die Nutzung der Abwärme und der damit verbundenen Vermeidung von Abwärmeverlusten die Wirkungsgradverschlechterung eines Dampfkraftwerks gering gehalten werden.

Die für das Wärmeverschubsystem genannten Vorteile können sinngemäß auf das Dampfkraftwerk übertragen werden.

Im Folgenden werden Ausführungsbeispiele der Erfindung anhand einer Zeichnung näher erläutert. Dabei zeigen:
- FIG 1: eine Teilansicht einzelner Komponenten eines Dampfkraftwerks mit einem Wärmeverschubsystem mit einem ersten Zwischenkreislauf, über den eine Abwärmequelle wärmetechnisch mit der Frischluftleitung gekoppelt ist, und
- FIG 2: eine Teilansicht einzelner Komponenten eines Dampfkraftwerks mit einem Wärmeverschubsystem, wobei ein erster und ein zweiter Zwischenkreislauf zur wärmetechnischen Kopplung eine Abwärmequelle an die Frischluftleitung vorgesehen sind.

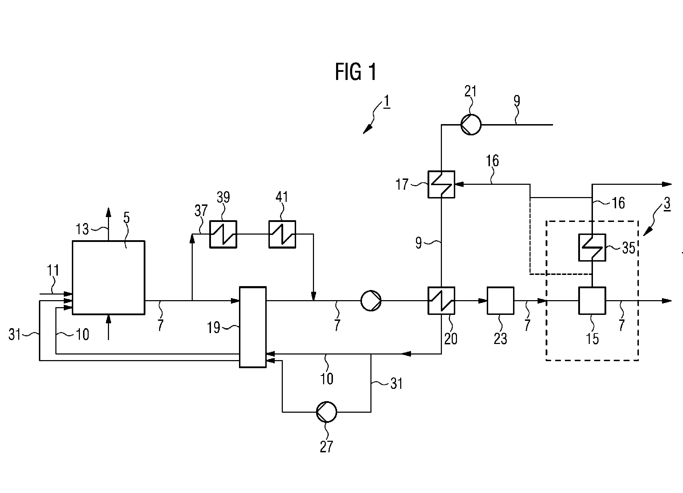

FIG 1 zeigt eine Teilansicht eines Dampfkraftwerks 1 mit einem Wärmeverschubsystem 3. Das Dampfkraftwerk 1 hat einen Dampfkessel 5, der mit einer abgehenden Rauchgasleitung 7 und einer eingehenden Frischluftleitung 9 verbunden ist. Als Verbrennungsluft wird hieraus ein Frischluftteilstrom über eine Sekundärluftleitung 10 in den Dampfkessel geführt. Sekundärluft Weiterhin sind dem Dampfkessel 5 eine Brennstoffzuleitung 11 und wenigstens eine Dampfleitung 13 angeschlossen.

Dem Wärmeverschubsystem 3 ist als Abwärmequelle eine Abscheidevorrichtung 15 für CO₂ zugeordnet. Die Abwärme der Abscheidevorrichtung 15 wird über eine Abwärmeleitung 16 abgeführt. Zur Einkopplung dieser Abwärme in den Kraftwerksprozess ist diese wärmetechnisch mit der Frischluftleitung 9 gekoppelt. Die wärmetechnische Kopplungsstelle 17 ist vorliegend als ein Wärmetauscher ausgestaltet. Durch die wärmetechnische Kopplung kann die von der Abscheidevorrichtung 15 abzuführende Wärme an die Frischluft übertragen werden kann.

Die Frischluft wird über ein Frischluftgebläse 21 angesaugt, das in der Frischluftleitung 9 angeordnet ist. Das Frischluftgebläse 21 saugt Luft mit einer Temperatur von z.B. 10 °C an. Die Frischluft wird dann zur Befeuerung des Dampfkessels 5 an diesen weiterleitet. Das Frischluftgebläse 21 ist der wärmetechnischen Kopplungsstelle 17 vorgeschaltet, wodurch ein wirtschaftlicher Betrieb erreicht wird. Der Volumenstrom und damit der elektrische Eigenbedarf ist niedriger.

Die Temperatur der angesagten Frischluft ist gegenüber der Temperatur der bei der CO₂-Abscheidung entstehenden Abwärme, die bei etwa 60 °C liegt, gering genug, um ein ausreichendes Temperaturgefälle für einen Wärmeverschub zwischen der Abwärmeleitung 16 und der Frischluftleitung 9 zu gewährleisten.

Der wärmetechnischen Kopplungsstelle 17 ist bezüglich der Frischluftleitung 9 ein Luftvorwärmer 19 nachgeschaltet, der als ein regenerativer Luftvorwärmer ausgebildet ist. Über diesen Luftvorwärmer 19 sind die Frischluftleitung 9 und die Rauchgasleitung 7 wärmetechnisch miteinander gekoppelt. Durch den Luftvorwärmer 19 wird das bei der Dampfkesselbefeuerung entstehende Rauchgas abgekühlt. Ein Teilstrom der Frischluft strömt zur Verbrennung über die Sekundärluftleitung 10 in den Dampfkessel 5.

Zwischen dem Luftvorwärmer 19 und der wärmetechnischen Kopplungsstelle 17 ist die Frischluftleitung 9 über einen Wärmetauscher 20 zusätzlich mit der Rauchgasleitung 7 gekoppelt. Die an der wärmetechnischen Kopplungsstelle 17 vorgewärmte Frischluft wird durch das Rauchgas in der Rauchgasleitung 7 weiter erwärmt. Das Rauchgas selbst kühlt dabei ab und wird mit einer verringerten Temperatur zu einer Erwärmung der Abscheidevorrichtung 15 verwendet und anschließende der Rauchgasreinigung bzw. der Rauchgasentschwefelung zugeführt.

Nach der Vorwärmung der Frischluft strömt diese in den Luftvorwärmer 19. Die vom Rauchgas abgegebene Wärme wird über den Luftvorwärmer 19 an die Frischluftleitung 9 abgegeben, so dass die angesaugte Luft weiter erwärmt wird.

Die Frischluftleitung 9 weist zusätzlich eine Bypassleitung 31 auf. Diese Bypassleitung 31 dient der Abzweigung eines Teilstroms als sogenannte Primärluft. Über ein Frischluftgebläse 27 in der Bypassleitung 31 wird dieser Teilstrom aus der Frischluftleitung 9 abgezogen und separat über den Luftvorwärmer 19 geführt.

Der Primärluft-Teilstrom wird über die Primärluftzuleitung 31 zur Kohletrocknung in einer in FIG 1 nicht gezeigten Mühle benötigt. Die verbleibende Luftmenge, der Sekundärluft-Teilstrom, wird ebenfalls durch den Luftvorwärmer 19 geleitet und dann mit deutlich erhöhter Temperatur dem Dampfkessel 5 über die Sekundärluftleitung 10 zur Verbrennung zugeführt.

Zum Abführen der Abwärme aus der CO₂-Abscheidevorrichtung 15 ist die Abwärmeleitung 16 wärmetechnisch mit der Frischluftleitung 9 gekoppelt. In einer ersten Ausführungsvariante (durchgezogene Linie) ist hierzu ein Wärmetauscher 35 zur Kühlung der Abscheidevorrichtung 15 vorgesehen. Dieser koppelt Wärme aus der Abscheidevorrichtung 15, beispielsweise aus der Rückleitung des Desorbers, mittels eines angeschlossenen Kühlkreislaufs aus. Das Kühlmedium, z.B. Wasser, wird nach Durchlaufen des Wärmetauschers 35 über den Wärmetauscher 17 geführt und erwärmt hierbei die Frischluft. In einer zweiten Variante wird das aus dem Desorber der Abscheidevorrichtung 15 zurückströmende Absorbermedium unmittelbar zur Wärmeübertragung genutzt und hierzu auf dem Weg zum Absorber über den Wärmetauscher 17 geführt (gestrichelte Linie).

Weiter ist in der Rauchgasleitung 7 eine Bypassleitung 37 vorgesehen. Der vom Dampfkessel 5 abgeleitete Rauchgasstrom wird in zwei Teilströme aufgeteilt, wobei einer der Teilströme wärmetechnisch mit einer Anzahl von Verbrauchern 39, 41 gekoppelt ist. Vorliegend sind die Verbraucher 39, 41 als ein Speisewasservorwärmer und ein Kondensatvorwärmer ausgebildet. Der bei dem Durchgang durch die Bypassleitung 37 abgekühlte Teilstrom des Rauchgases wird dann wieder dem Teilstrom zugeführt werden, der den Luftvorwärmer 19 durchströmt hat. Der Wärmeüberschuss auf der Frischluftseite, der durch Einkopplung der Wärme aus der CO₂-Abscheidevorrichtung 15 resultiert wird auf die Rauchgasseite übertragen und dort auf wesentlich höherem Temperaturniveau wieder in das Dampfkraftwerk 1 eingebunden.

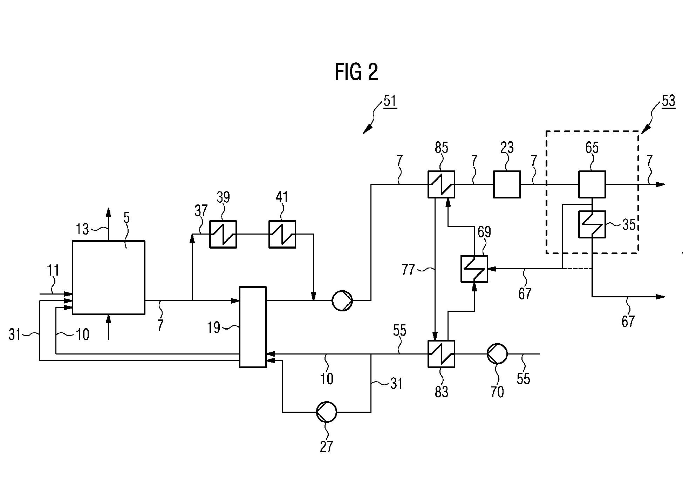

In FIG 2 ist ebenfalls eine Teilansicht eines Dampfkraftwerks 51 mit einem Wärmeverschubsystem 53 gezeigt. Auch in FIG 2 ist eine Frischluftzuleitung 55 und eine Rauchgasleitung 7 umfasst, die jeweils mit dem Dampfkessel 5 verbunden sind. Dem Dampfkessel 5 sind eine Brennstoffzuleitung 11 und eine Dampfleitung 13 angeschlossen.

Dem Wärmeverschubsystem 53 ist als Abwärmequelle eine CO₂-Abscheidevorrichtung 65 zugeordnet. Die Abwärme der Abscheidevorrichtung 65 wird über eine Abwärmeleitung 67 abgeführt und über die wärmetechnische Kopplung mit der Frischluftleitung 55 in den Kraftwerksprozess eingekoppelt. Die hierzu vorgesehene wärmetechnische Kopplungsstelle 69 ist als ein Wärmetauscher ausgebildet und kann die von der Abscheidevorrichtung 65 abzuführende Abwärme an die Frischluft übertragen.

Die Frischluft wird über ein Frischluftgebläse 70 angesaugt, der in der Frischluftleitung 55 angeordnet ist. Die vom Frischluftgebläse 70 angesaugte Temperatur liegt bei etwa 10 °C an und wird zur Befeuerung des Dampfkessels 59 an diesen weiterleitet. Auch das Frischluftgebläse 70 ist der wärmetechnischen Kopplungsstelle 69 vorgeschaltet.

Die Temperatur der angesaugten Frischluft ist gegenüber der Temperatur der bei der CO₂-Abscheidung entstehenden Abwärme, die bei etwa 60 °C liegt, gering genug, um ein ausreichendes Temperaturgefälle für einen Wärmeverschub zwischen der Abwärmeleitung 7 und der Frischluftleitung 55 zu gewährleisten. Hierzu wird die Abwärme über einen Wärmetauscher 69 eines implementierten Zwischenkreislaufs 77 übertragen. Dieser Zwischenkreislauf 77 koppelt die Frischluftleitung 55 und die Rauchgasleitung 7 wärmetechnisch miteinander. Dazu sind zwei Wärmetauscher 83, 85 vorgesehen. Das Wärmetransportmedium zirkuliert in dem Zwischenkreislauf 77 zwischen den beiden Wärmetauschern 83, 85 und gibt die am zweiten Wärmetauscher 85 aufgenommene Wärme über den ersten Wärmetauscher 83 an die Frischluft ab, so dass diese erhitzt wird.

Wie in Fig. 1 wird die Abwärme aus der Abscheidevorrichtung 65 alternativ über ein Wärmetransportmedium aus einem bestehenden Kühlkreislauf auf den Wärmetauscher 69 übertragen (gestrichtelte Linie) oder es wird die Absorberrückführleitung der Abscheidevorrichtung 65 zwischen Desorber und Absorber mit dem Wärmetauscher 69 gekoppelt, so dass das warme Absorbermedium zur Abkühlung über diesen Wärmetauscher 69 geführt ist, bevor es abgekühlt in den Absorber geleitet wird.

Durch diese Kopplung und den Wärmeverschub kann die Frischluft entsprechend vorgewärmt werden. Das Rauchgas selbst wird dabei abgekühlt und kann so auf einem für eine weitere Reinigung benötigten Temperaturniveau der Rauchgaswäsche 89 zugeführt werden.

Die vorgewärmte Frischluft strömt über die Frischluftleitung 55 in Richtung eines Luftvorwärmers 19 und des Dampfkessels 5. Die folgenden Prozesse bzw. die in FIG 2 gezeigten Teile des Dampfkraftwerks entsprechen denen in FIG 1, so dass an dieser Stelle auf die dortige detaillierte Beschreibung verwiesen wird.

## Patentansprüche

1. Wärmeverschubsystem (3, 53) in einem Dampfkraftwerk (1, 51), umfassend einen befeuerten Dampfkessel (5, 59) mit einer abgehenden Rauchgasleitung (7, 57) und einer eingehenden Frischluftleitung (9, 55), sowie eine Abwärmequelle, insbesondere eine Abscheidevorrichtung (15, 65) für CO₂, mit einer Abwärmeleitung (16, 67), wobei die Abwärmeleitung (16, 67) wärmetechnisch mit der Frischluftleitung (9, 55) gekoppelt ist.

2. Wärmeverschubsystem (3, 53) nach Anspruch 1,
wobei ein Luftvorwärmer (19) umfasst ist, der die Rauchgasleitung (7, 57) und die Frischluftleitung (9, 55) wärmetechnisch miteinander koppelt und der bezüglich der Frischluftleitung (9, 55) der wärmetechnischen Kopplungsstelle (17, 69) mit der Abwärmeleitung (16, 67) nachgeschaltet ist.

3. Wärmeverschubsystem (3, 53) nach Anspruch 2,
wobei zwischen dem Luftvorwärmer (19, 87) und der Kopplungsstelle (17, 69) die Frischluftleitung (9, 55) zusätzlich wärmetechnisch mit der Rauchgasleitung (7, 57) gekoppelt ist.

4. Wärmeverschubsystem (3, 53) nach einem der vorhergehenden Ansprüche,
wobei der Kopplungsstelle (17, 69) der Frischluftleitung (9, 55) mit der Abwärmeleitung (16, 67) ein Frischluftgebläse (21, 81) vorgeschaltet ist.

5. Wärmeverschubsystem (3, 53) nach einem der vorhergehenden Ansprüche,
wobei ein Zwischenkreislauf (77) umfasst ist, über den die Abwärmeleitung (16, 67) der Abscheidevorrichtung (15, 65) wärmetechnisch mit der Frischluftleitung (9, 55) gekoppelt ist.

6. Wärmeverschubsystem (3, 53) nach Anspruch 5,
wobei über den Zwischenkreislauf (77) die Rauchgasleitung (7,57) mit der Frischluftleitung (9, 55) wärmetechnisch gekoppelt ist.

7. Wärmeverschubsystem (3, 53) nach einem der Ansprüche 2 bis 6,
wobei der Luftvorwärmer (19) als ein regenerativer Wärmetauscher ausgebildet ist.

8. Wärmeverschubsystem (3, 53) nach einem der vorhergehenden Ansprüche,
wobei an der Rauchgasleitung (7, 57) eine Bypassleitung (37) zur wärmetechnischen Ankopplung einer Anzahl von Verbrauchern (39, 41) angeschlossen ist.

9. Dampfkraftwerk (1, 51), umfassend eine Dampfturbine mit einer Anzahl von Teilturbinen, die jeweils von Dampf durchströmbar sind und die über Überströmleitungen miteinander verbunden sind, sowie ein Wärmeverschubsystem (3, 53) nach einem der Ansprüche 1 bis 8, wobei eine Anzapfleitung zur Auskopplung von Prozessdampf vorgesehen ist, die wärmetechnisch mit einer Abwärmequelle, insbesondere mit einer Abscheidevorrichtung (15, 65) für CO₂, gekoppelt ist.

10. Dampfkraftwerk (1, 51) nach Anspruch 9,
wobei die Anzapfleitung zur Auskopplung von Prozessdampf an eine Überströmleitung angeschlossen ist.
